## Europäisches Patentamt

## European Patent Office

## Office européen des brevets

(11) Veröffentlichungsnummer: **0 281 888 B1**

(19)

# EUROPÄISCHE PATENTSCHRIFT

(12)

(45) Veröffentlichungstag der Patentschrift: **07.10.92**

(21) Anmeldenummer: **88103015.9**

(22) Anmeldetag: **29.02.88**

(51) Int. Cl.⁵: **H04Q 11/04**, H04M 3/00

(54) Schaltungsanordnung für Teilnehmeranschlussschaltungen einer digitalen Zeitmultiplex-Fernmelde-Vermittlungsstelle.

(30) Priorität: **09.03.87 DE 3707500**
**02.04.87 DE 3711030**

(43) Veröffentlichungstag der Anmeldung:
**14.09.88 Patentblatt 88/37**

(45) Bekanntmachung des Hinweises auf die Patenterteilung:
**07.10.92 Patentblatt 92/41**

(84) Benannte Vertragsstaaten:
**AT BE CH DE FR GB GR IT LI NL SE**

(56) Entgegenhaltungen:
**EP-A- 0 017 835**
**EP-A- 0 151 917**
**WO-A-85/00261**

(73) Patentinhaber: **SIEMENS AKTIENGESELL-SCHAFT**
**Wittelsbacherplatz 2**
**W-8000 München 2(DE)**

(72) Erfinder: **Lechner, Robert, Dipl.-Ing.**
**Dr. Bilcik Gasse 16**
**A-3100 Sankt Pölten(AT)**
Erfinder: **Wingerath, Norbert, Dipl.-Ing.**
**Zillertalstrasse 63**
**W-8000 München 70(DE)**

## Beschreibung

Die Erfindung betrifft eine Schaltungsanordnung für Teilnehmeranschlußschaltungen einer digitalen Zeitmultiplex-Fernmelde-Vermittlungsstelle, über die jeweils während der Zeitschlitze zugeteilter Zeitkanäle eine Verbindung zu wenigstens einer vierdrähtigen Busleitung der Zeitmultiplex-Fernmelde-Vermittlungsstelle hergestellt wird.

Bei bekannten Anordnungen dieser Art (siehe z.B. Product Specification Am 7901 der Firma AMD-Advanced Micro Devices) ist mit der Zuteilung eines Empfangszeitschlitzes und einer Anschaltung der Teilnehmeranschlußschaltungen an den Empfangszweig der Busleitung immer auch eine Zuteilung eines Sendezeitschlitzes und eine Anschaltung an den Sendezweig der Busleitung verbunden.

Für bestimmte Fälle, beispielsweise im Notbetrieb oder für die Durchführung von Ansagediensten, ist es erforderlich, an eine Mehrzahl von Teilnehmeranschlußschaltungen und damit von Teilnehmerendgeräten jeweils während desselben Zeitschlitzes dieselbe Information zu senden. Aus Dokument EP-A-0 151 917 ist eine Vermittlungsstelle bekannt mit der derartige Verbindungen (Broadcasting) hergestellt werden können. Die hiermit verbundene gleichzeitige Anschaltung der Empfangszweige der betroffenen Teilnehmeranschlußschaltungen die Busleitung würde dabei keine Schwierigkeiten bereiten. Wenn dagegen, wie üblich, auch eine Sendezeitschlitzzuteilung und eine Anschaltung mehrerer Teilnehmeranschlußschaltungen an den Sendezweig der Busleitung erfolgt, und damit Sendetreiberstufen mehrerer Teilnehmeranschlußschaltungen aufeinander einwirken können, wird es bei unterschiedlichen Sendesignalpegeln, die immer vorausgesetzt werden müssen, zu Zerstörungen dieser Sendetreiberstufen kommen.

Die Aufgabe der Erfindung besteht daher darin eine Schaltungsanordnung anzugeben, die unter den obengenannten Voraussetzungen einen solchen gleichzeitigen Empfang derselben Information durch eine Mehrzahl von Teilnehmeranschlußschaltungen bzw. Teilnehmerendgeräten ermöglicht (Broadcasting) ohne daß solche Beschädigungen möglich sind.

Erfindungsgemäß wird diese Aufgabe mit der eingangs erwähnten Schaltungsanordnung gelöst, die dadurch gekennzeichnet ist, daß sie für einen gleichzeitigen Empfang derselben Information durch eine Mehrzahl von Teilnehmeranschlußschaltungen und damit eine Mehrzahl von Teilnehmerendgeräten jeweils während derselben Zeitschlitze die Empfangszweige der betroffenen Teilnehmeranschlußschaltungen von der Busleitung aus zugänglich macht, dabei aber einen Zugriff von den Sendezweigen dieser Teilnehmeranschlußschaltungen auf die Busleitung unterbindet.

Bei einer Ausführungsform der erfindungsgemäßen Schaltungsanordnung erfolgt unter Voraussetzung einer Gliederung der Teilnehmeranschlußschaltungen, bei der eine gesonderte Baueinheit für die Zeitschlitzzuordnung und für die Anschaltung an die Busleitung vorhanden ist, das Unterbinden des Zugriffs der Sendezweige der Teilnehmeranschlußschaltungen auf die Busleitung dadurch, daß die Endstufen der Sendeverstärker dieser Baueinheiten in den hochohmigen Zustand versetzt werden.

Bei einer anderen Ausführungsform sind außer den genannten Baueinheiten gesonderte Schalterbausteine vorgesehen, die zwischen diesen Baueinheiten und der Busleitung angeordnet sind und über deren Schalter die Sendezweige mit der Busleitung verbunden werden, und im Falle einer gewünschten Zugriffsverhinderung geöffnet sind.

Nachstehend wird die Erfindung anhand eines Ausführungsbeispiels unter Bezugnahme auf eine Figur näher erläutert.

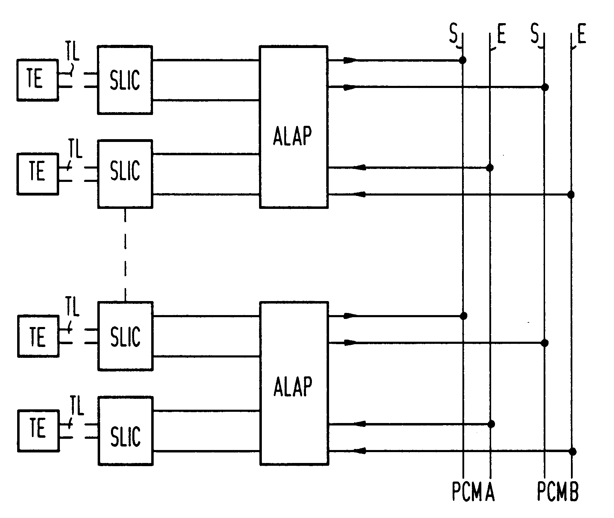

Die Figur zeigt den Anschlußbereich einer Zeitmultiplex-Vermittlungsstelle zusammen mit den über Teilnehmeranschlußleitungen TL an diese Vermittlungsstelle angeschlossenen Teilnehmerendgeräten TE.

Die Teilnehmeranschlußschaltungen bestehen im dargestellten Fall aus einem teilnehmerindividuellen Baustein SLIC sowie aus einem zwei Teilnehmerendgeräten zugeordneten Baustein ALAP. Durch die Bausteine SLIC wird ein erster Teil der sogenannten Borscht-Funktionen abgewickelt, nämlich die Funktion der Teilnehmerspeisung (Battery), des Überspannungsschutzes (Overvoltage), der Rufeinspeisung (Ringing), der Signalisierung und Leitungszustandsüberwachung (Signals, Supervision) und des Zweidraht-Vierdraht-Übergangs (Hybrid). In den Baueinheiten ALAP werden die restlichen der Borscht-Funktionen realisiert, nämlich die Analog-Digital-Wandlung und Digital-Analog-Wandlung (Coding), sowie die in diesem Zusammenhang erforderlichen Filterfunktionen.

An die Baueinheiten ALAP sind im dargestellten Fall zwei Busleitungen PCMA und PCMB mit jeweils einem Sendezweig S und einem Empfangszweig E angeschlossen. Diese Busleitungen stellen eine Verbindung mit dem hier nicht dargestellten Koppelfeld der Vermittlungsstelle her, zu der der dargestellte Anschlußbereich gehört.

Die Baueinheiten ALAP enthalten ferner Einrichtungen zur Zeitschlitzzuordnung und zur wahlweisen Anschaltung an die Busleitungen PCMA und PCMB.

Die Baueinheiten SLIC und ALAP des Anschlußbereichs stehen unter dem Steuereinfluß einer mehrere Anschlußschaltungen bedienenden, hier nicht dargestellten Gruppensteuerung.

Wenn eine Mehrzahl von Teilnehmeranschlußschaltungen bzw. Teilnehmerendgeräte dieselbe Information, beispielsweise im Zuge einer Ansage, erhalten soll, dann wird den Empfangszweigen der betroffenen Teilnehmeranschlußschaltungen durch die jeweilige Baueinheit ALAP jeweils derselbe Empfangszeitschlitz zugeordnet. Wie dargelegt ist mit einer solchen Zuordnung eines Empfangszeitschlitzes auch die Zuordnung eines Sendezeitschlitzes verbunden. Die Gefahr, daß dadurch von mehreren Teilnehmeranschlußschaltungen aus auf demselben Zeitschlitz gesendet wird, mit der Folge der Zerstörung der sendeseitigen Endstufen läßt sich dann nicht vermeiden, wenn die Anzahl der Teilnehmeranschlußschaltungen, die gleichzeitig eine Information empfangen sollen, größer ist als die Anzahl der auf den Busleitungen gebildeten Zeitschlitze (je nach Ausführungsvariante 32 oder 64).

Erfindungsgemäß wird daher bei einem solchen Broadcasting der Zugriff der Sendezweige der betroffenen Teilnehmeranschlußschaltungen auf die Busleitung unterbunden. Dies kann dadurch geschehen, daß die sendeseitigen Endstufen der Baugruppen ALAP, über die die Verbindung zu den Busleitungen hergestellt wird, hochohmiggeschaltet werden. Es kann jedoch auch ein gesonderter Schalterbaustein vorgesehen sein, der zwischen den Baugruppen ALAP und den Busleitungen PCMA und PCMB angeordnet ist und die Verbindung zwischen diesen Sendezweigen und den Sendezweigen S der Busleitungen unterbricht.

**Patentansprüche**

1.  Schaltungsanordnung für Teilnehmeranschlußschaltungen einer digitalen ZeitmultiplexFernmelde-Vermittlungsstelle, über die jeweils während der Zeitschlitze zugeteilter Zeitkanäle eine Verbindung zu wenigstens einer vierdrähtigen Busleitung der Zeitmultiplex-FernmeldeVermittlungsstelle hergestellt wird,
    **dadurch gekennzeichnet,**
    daß sie für einen gleichzeitigen Empfang derselben Information durch eine Mehrzahl von Teilnehmeranschlußschaltungen (SLIC/ALAP) und damit eine Mehrzahl von Teilnehmerendgeräten (TE) jeweils während derselben Zeitschlitze die Empfangszweige der betroffenen Teilnehmeranschlußschaltungen von der wenigstens einen Busleitung (PCMA, PCMB) aus zugänglich macht, dabei aber einen Zugriff von den Sendezweigen dieser Teilnehmeranschlußschaltungen auf die Busleitung unterbindet.

2.  Schaltungsanordnung nach Anspruch 1, für Teilnehmeranschlußschaltungen die eine gesonderte Baueinheit (ALAP) für die Zeitschlitzzuordnung und für die Anschaltung an die Busleitung (PCMA, PCMB) umfassen,
    **dadurch gekennzeichnet,**
    daß zur Verhinderung eines Zugriffs von den Sendezweigen der Teilnehmeranschlußschaltungen (SLIC/ALAP) auf die wenigstens eine Busleitung (PCMA, PCMB) die Endstufen der betroffenen Sendeverstärker dieser gesonderten Baueinheiten (ALAP) in den hochohmigen Zustand versetzt werden.

3.  Schaltungsanordnung nach Anspruch 1, für Teilnehmeranschlußschaltungen die eine gesonderte Baueinheit (ALAP) für die Zeitschlitzzuordnung und für die Anschaltung an die Busleitung (PCMA, PCMB) umfassen,
    **dadurch gekennzeichnet,**
    daß zwischen den gesonderten Baueinheiten (ALAP) und der wenigstens einen Busleitung (PCMA, PCMB) Schalterbausteine angeordnet sind, deren Schalterverbindungen zu den Sendezweigen (S) der Busleitungen herstellen und im Falle der durch einen gemeinsamen Empfang derselben Information betroffenen Teilnehmeranschlußschaltungen jeweils geöffnet sind.

**Claims**

1.  Circuit arrangement for subscriber line interface circuits of a digital time-division multiplex telecommunication exchange, via which a connection to at least one four-wire bus line of the time-division multiplex telecommunication exchange is in each case established during the time slots of allocated time channels characterised in that it makes the affected receiving branches of the subscriber line interface circuits accessible from the at least one bus line (PCMA, PCMB) for a simultaneous reception of the same information by a plurality of subscriber line interface circuits (SLIC/ALAP) and thus a plurality of subscriber terminals (TE) in each case during the same time slots but at the same time prevents an access from the transmitting branches of these subscriber line interface circuits to the bus line.

2.  Circuit arrangement according to Claim 1, for subscriber line interface circuits which comprise a separate constructional unit (ALAP) for the time slot allocation and for the connection to the bus line (PCMA, PCMB), characterised in that in order to prevent an access from the transmitting branches of the subscriber line interface circuits (SLIC/ALAP) to the at least one bus line (PCMA, PCMB), the output stages of the transmitting amplifiers affected in these separate constructional units (ALAP) are placed in the high-impedance state.

3. Circuit arrangement according to Claim 1, for subscriber line interface circuits which comprise a separate constructional unit (ALAP) for the time slot allocation and for the connection to the bus line (PCMA, PCMB), characterised in that between the separate constructional units (ALAP) and the at least one bus line (PCMA, PCMB), switch components are arranged which establish switch connections to the transmitting branches (S) of the bus lines and which are in each case opened in the case of the subscriber line interface circuits affected by a common reception of the same information.

**Revendications**

1. Montage pour des circuits de raccordement d'abonnés d'un central numérique de télécommunications à multiplexage temporel, et au moyen duquel une liaison avec au moins une ligne formant bus à quatre fils du central de télécommunications à multiplexage temporel est établie respectivement pendant les créneaux temporels de canaux temporels affectés, caractérisé par le fait que pour une réception simultanée d'une même information par une multiplicité de circuits de raccordement d'abonnés (SLIC/ALAP) et par conséquent par une multiplicité de postes terminaux d'abonnés (TE), il autorise, pendant ces mêmes créneaux temporels, l'accession des branches de réception des circuits de raccordement d'abonnés concernés, à partir d'au moins une ligne formant bus (PCMA, PCMB), mais empêche un accès à la ligne formant bus par les branches d'émission de ces circuits de raccordement d'abonnés.

2. Montage suivant la revendication 1, pour des circuits de raccordement d'abonnés qui comprennent une unité de construction particulière (ALAP) pour l'association de créneaux temporels et le raccordement à la ligne formant bus (PCMA, PCMB), caractérisé par le fait que pour empêcher un accès des branches d'émission des circuits de raccordement d'abonnés (SLIC/ALAP) à au moins une ligne formant bus (PCMA,PCMB), les étages finals des amplificateurs d'émission concernés de ces unités de construction particulières (ALAP) sont placés dans l'état de forte valeur ohmique.

3. Montage suivant la revendication 1, pour des circuits de raccordement d'abonnés qui comprennent une unité de construction particulière (ALAP) pour l'association de créneaux temporels et le raccordement à la ligne formant bus (PCMA, PCMB), caractérisé par le fait qu'entre les unités de construction particulières (ALAP) et au moins une ligne formant bus (PCMA, PCMB) sont disposés des modules formant interrupteurs, dont les interrupteurs établissent des liaisons avec les branches d'émission (S) des lignes formant bus et sont respectivement ouverts dans le cas des circuits de raccordement d'abonnés concernés par une réception commune de la même information.